# EUROPEAN PATENT SPECIFICATION

(11) **EP 0 895 230 B1**
(45) Date of publication and mention of the grant of the patent: **16.11.2005**
(21) Application number: 98113913.2
(22) Date of filing: 24.07.1998
(51) Int. Cl.: G11B 7/24

(54) **Optical information recording medium**
Medium für optische Datenaufzeichnung
Medium pour l'enregistrement d'information optique

(30) Priority: 01.08.1997 JP 21977897; 19.06.1998 JP 18807298
(43) Date of publication of application: 03.02.1999
(73) Proprietor: TAIYO YUDEN CO., LTD., Taito-ku Tokyo (JP)
(72) Inventor: Takagishi, Yoshikazu, c/o Taiyo Yuden Co., Ltd., Tokyo (JP); Matsumoto, Takanobu, c/o Taiyo Yuden Co., Ltd., Tokyo (JP); Shin, Yuaki, c/o Taiyo Yuden Co., Ltd., Tokyo (JP); Hamada, Emiko, c/o Taiyo Yuden Co., Ltd., Tokyo (JP)
(74) Representative: Grünecker, Kinkeldey, Stockmair & Schwanhäusser Anwaltssozietät

(56) References cited:
- EP-A- 0 455 124
- EP-A- 0 467 716
- EP-A- 0 516 907
- US-A- 5 238 723
- PATENT ABSTRACTS OF JAPAN vol. 014, no. 345 (P-1083), 26 July 1990 & JP 02 122439 A (HITACHI MAXELL LTD), 10 May 1990

## Description

### BACKGROUND OF THE INVENTION

### 1. Field of the Invention

The present invention relates to an optical information recording medium, and more particularly to a writeable optical information recording medium comprising at least a light absorbing layer and light reflecting layer on a transparent substrate.

### 2. Description of the Related Art

Conventional, writeable optical information recording media are based on the structure wherein a light absorbing layer, comprising an organic dye, is established on a transparent substrate which is pre-grooved in a spiral pattern, and a light reflecting layer, comprising a metal film or the like, is further established on the light absorbing layer, as in Japanese Patent Publication No. 07-105065.

Information is recorded as follows. A recording beam, such as a laser beam, is shone on this optical information recording medium from the substrate side thereof. The light absorbing layer absorbs the energy and a pit is recorded by the heating and decomposition of the dye in the light absorbing layer, or the thermal deformation of the substrate.

Such a writeable optical information recording medium is generally known as a "CD-R". A CD-R is essentially a compact disk (CD) for playback purposes or a disk such as a CD-ROM; this can only be written to once and the recording cannot be removed. For this reason, these have come to be widely used, especially in the field of information processing.

With the increasing amounts of information to be recorded, and the ever more highly complex levels of information processing, the speed of recording on and reading from optical information recording media have both been increasing for the past several years. 6X recording apparatuses and 15X CD-ROM drives, for reading disks, were common in the CD-R market by the end of 1996.

When recording at high speeds, at 6X, for example, the line speed is multiplied six times and a high output laser beam is radiated for 1/6 of each period of time corresponding to each pit length nT of the EFM signal. As a result, an optical information recording medium recorded with a signal having pit lengths within the prescribed range of 3T to 11T is attained.

Consequently, the recording apparatus is required to have a precision greater than conventional recording at an equivalent speed, in order to control the length of each recorded pit T.

Also, because pits of each prescribed length must be formed in only a fraction of the time used up to now, the impact of the heat generated during recording and of heat interference on the recorded medium is accordingly greater than before.

Consequent problems are the deviation of pit lengths and that the jitter, caused by the thermal heterogeneity generated during high speed recording, has been made worse.

Jitter properties can be improved by using a cyanine dye comprising halogen anions such as Br⁻ or I⁻ anions (negative ions of iodine), which generate little heat, in order to suppress this thermal heterogeneity.

However, I⁻ anions and Br⁻ anions are highly reactive and will react with a light reflecting layer comprising a metal film (such as silver, or the like) other than gold (Au). The reaction deteriorates the light reflecting layer and limits cost reductions.

Furthermore, low molecular weight compounds have a higher degree of molecular diffusion because of the heat in the film and cause problems for storage under high heat and high humidity conditions. In other words, even when using a light absorbing layer comprising anions other than I⁻ anions and Br⁻anions, the molecular diffusion discussed above occurs easily and causes problems in reliability when the aforementioned cyanine dye and additives have low molecular weights, of 600 or less, for example.

When a highly water soluble cyanine formula is used, the molecular diffusion thereof is mediated by the hot water permeating the light absorbing layer at high temperatures and high humidity. This molecular diffusion easily degrades the recorded signal. Many of the cyanine dyes having this property contain I⁻ anions and Br⁻ anions.

### SUMMARY OF THE INVENTION

In view of the foregoing, it is an object of the present invention to provide an optical information recording medium with superior resistance to humidity and water.

It is another object of the present invention to provide an optical information recording medium wherein deterioration of the signal under conditions of high heat and humidity is prevented.

It is another object of the present invention to provide an optical information recording medium with a lesser degree of heat-generated diffusion of the dye molecules in the light absorbing layer under conditions of high heat and humidity.

It is another object of the present invention to provide an optical information recording medium wherein less expensive metals, such as Ag (silver) and aluminum (Al), can be used as the material for the light reflecting layer instead of expensive gold (Au).

### BRIEF DESCRIPTION OF THE DRAWINGS

Figure 1 shows the structural formula of a first example of the material (benzoindodicarbocyanine) for the light absorbing layer 3 in the optical information recording medium 1 according to the present invention;
Figure 2 shows the structural formula of a second example of above material;
Figure 3 shows the structural formula of a third example of above material;
Figure 4 shows the structural formula of a fourth example of above material;
Figure 5 shows the structural formula of a fifth example of above material;
Figure 6 shows the structural formula of a sixth example of above material;
Figure 7 shows the structural formula of a seventh example of above material;
Figure 8 shows the structural formula of a eighth example of above material;
Figure 9 shows the structural formula of a ninth example of above material;
Figure 10 shows the structural formula of a tenth example of above material;
Figure 11 shows the structural formula of a eleventh example of above material;
Figure 12 shows the structural formula of a twelfth example of above material;
Figure 13 shows the structural formula of a thirteenth example of above material;
Figure 14 shows the structural formula of a fourteenth example of above material;
Figure 15 shows the structural formula of a fifteenth example of above material;
Figure 16 shows the structural formula of a sixteenth example of above material;
Figure 17 shows the structural formula of a seventeenth example of above material;
Figure 18 shows the structural formula of a eighteenth example of above material;
Figure 19 shows the structural formula of a nineteenth example of above material;
Figure 20 shows the structural formula of a twentieth example of above material;
Figure 21 is a cross sectional view of the optical information recording medium according to the present invention;
Figure 22 is a diagram showing the structural formula of a benzoindodicarbocyanine dye which may be employed as the principal light absorbing material in the optical information recording medium according to the present invention;
Figure 23 is a diagram showing the structural formula of the benzoic cyanine dye (Nihon Kankou Shikisou Kenkyusho (Photosensitive Dye Research Institute of Japan unofficial translation), No. NK-3386) used in the first embodiment of the optical information recording medium according to the present invention;
Figure 24 is a diagram showing the structural formula of the indocyanine dye used in the first comparison example of the optical information recording medium according to the present invention; and
Figure 25 is a diagram showing the structural formula of the benzoic cyanine dye (No. NK-4285) used in the second embodiment.

### DESCRIPTION OF THE PREFERRED EMBODIMENTS

Specifically, the present invention gives attention to the high water solubility of dye, the lack of resistance to water and humidity, and hence to keeping the water solubility within an appropriate range; the present invention is an optical information recording medium for recording information by shining a recording beam on a light absorbing layer, comprising a transparent substrate; a light absorbing layer including a light absorbing material, comprising a dye for absorbing the recording beam from a laser, and which is established on this substrate; and a light reflecting layer for reflecting the laser beam and which is established on this light absorbing layer. In this optical information recording medium, the solubility of the aforementioned light absorbing layer in water at a temperature of 70 °C is no more than 1.0 x 10⁻¹ milligrams/liter.

The solubility is measured as follows. 10 milligrams of material is placed in one liter of water at a temperature of 70 °C; this temperature is maintained while the mixture is agitated for 30 minutes. Afterwards, this solution is filtered using a 0.2 mm mesh PTFE filter. This filter is dried and the difference from the weight of the filter before filtration is used as the weight of material remaining on the filter; the solubility in 70 °C water is calculated from this weight.

The solubility in 70 °C water of the aforementioned light absorbing material comprising the aforementioned light absorbing layer can be 1.0 x 10⁻¹ milligrams/liter or less.

The molecular weight of the aforementioned light absorbing material comprising the aforementioned light absorbing layer can be 600 - 2000.

The aforementioned light absorbing material comprising the aforementioned light absorbing layer can be benzoindodicarbocyanine dye.

The anions in the aforementioned benzoindodicarbocyanine dye can be any of the following: ClO₄⁻, PF₆⁻, BF₄⁻, SbF₆⁻, IO₄⁻, CF₃COO⁻.

When the molecular weight of the materials in the light absorbing layer is less than 600, water solubility becomes high and the light absorbing layer easily changes over time due to the movement of molecules under high heat and humidity conditions. When the molecular weight of the materials is greater than 2000, the materials do not easily dissolve in the solvent for application when the film is formed.

Moreover, the present invention has two types of resistance to water and humidity: the type where it is possible to record after humidity resistance tests, and the type where humidity resistance after recording is good.

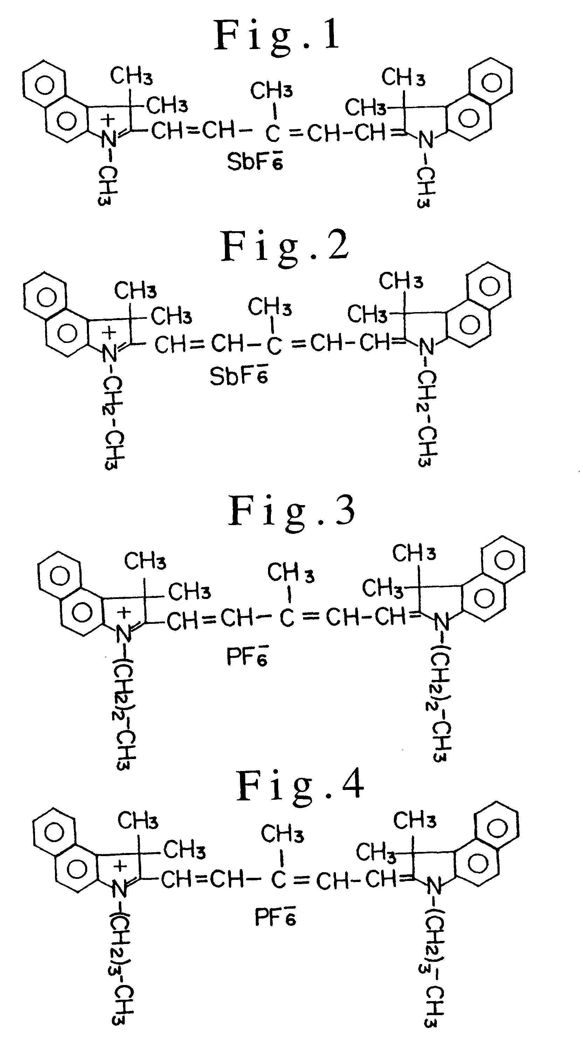

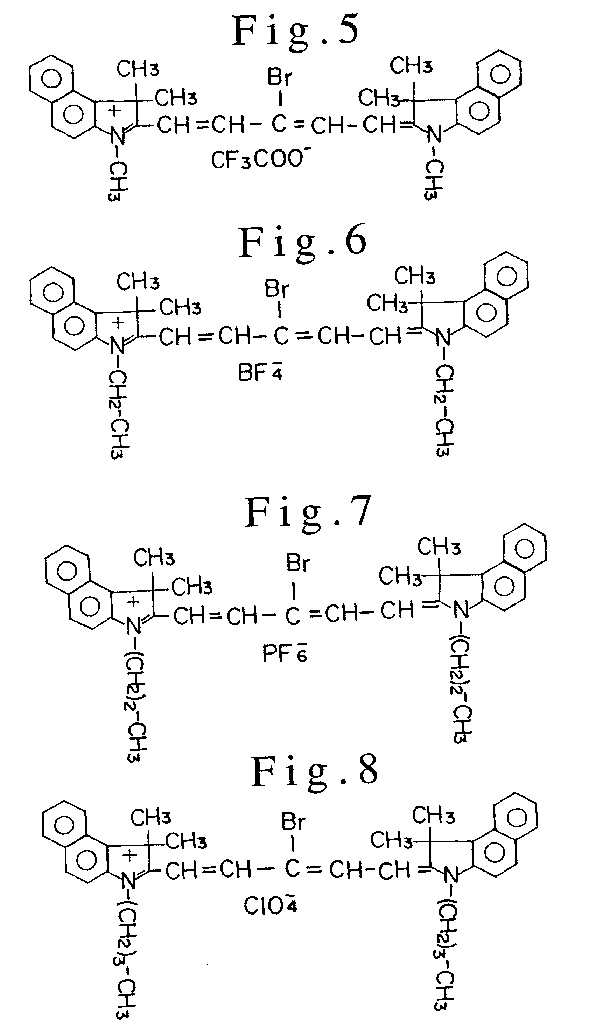

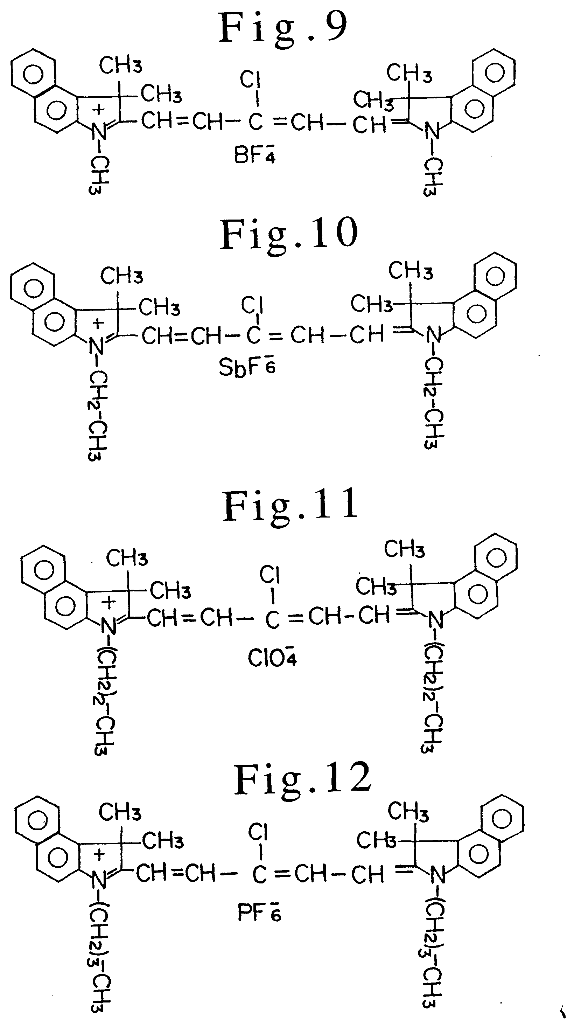

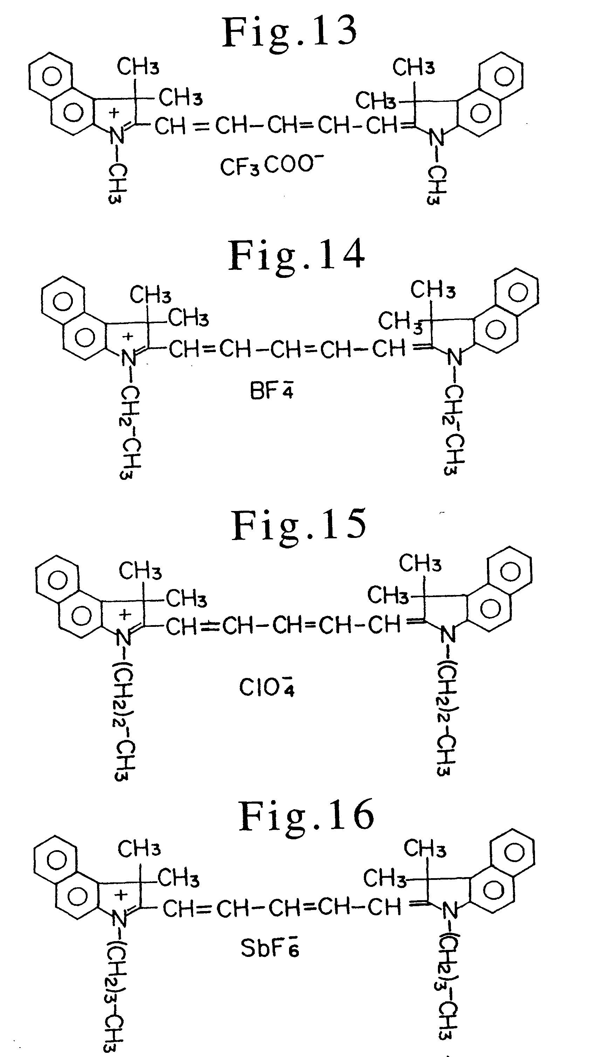

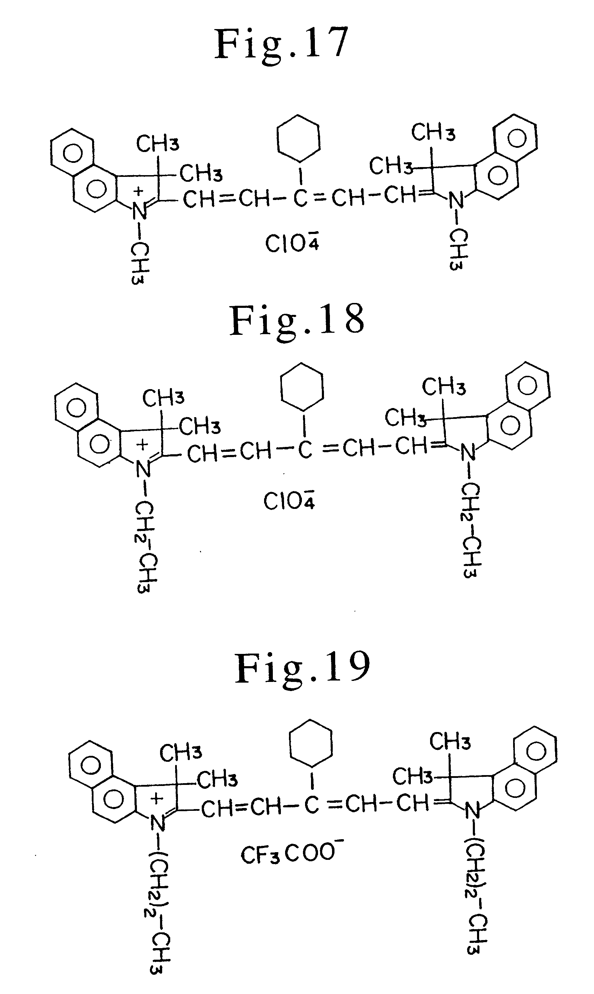

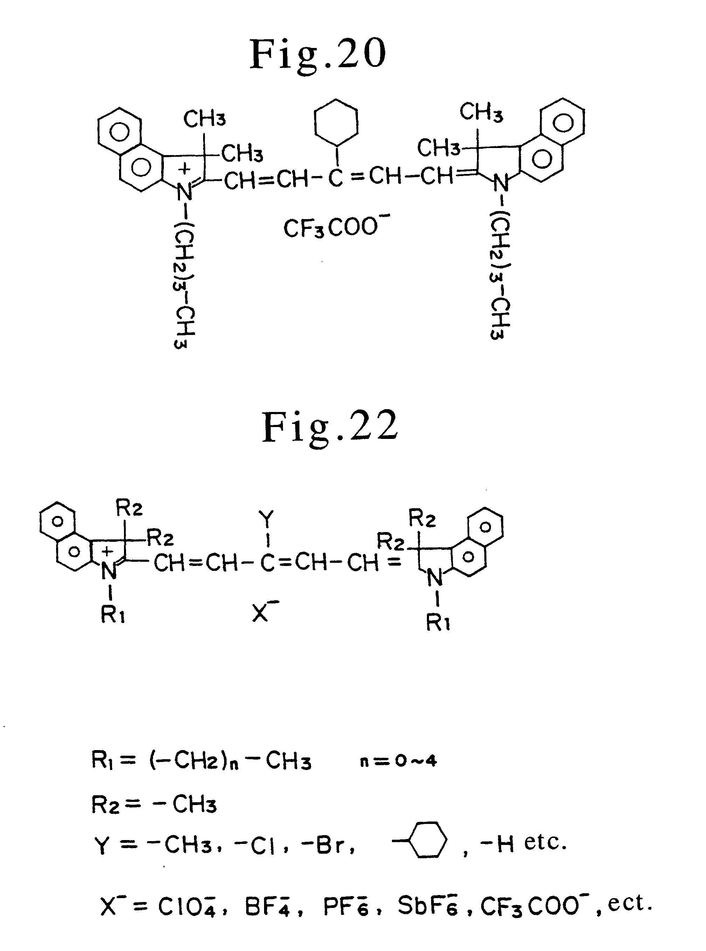

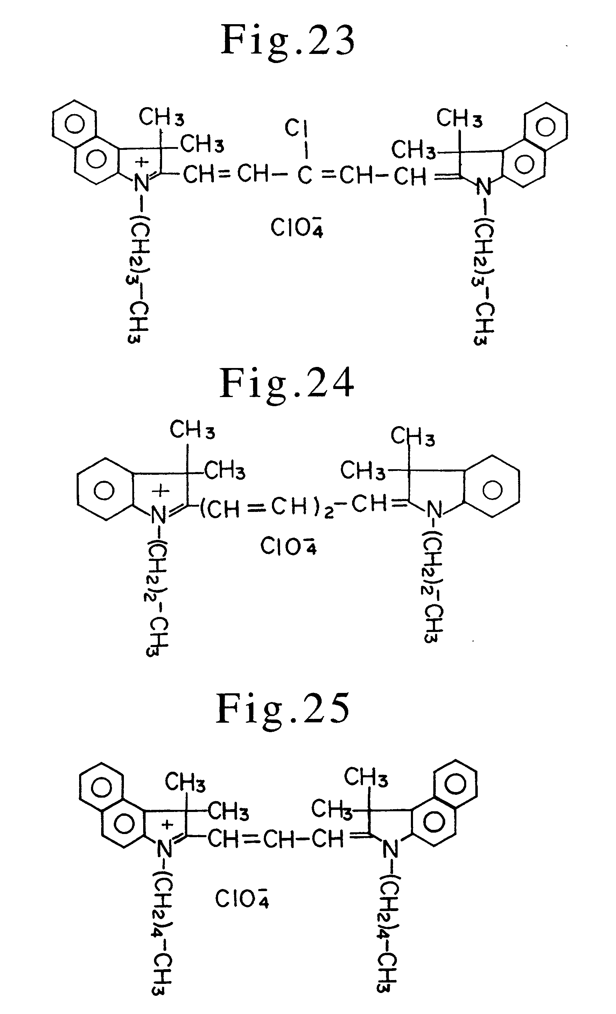

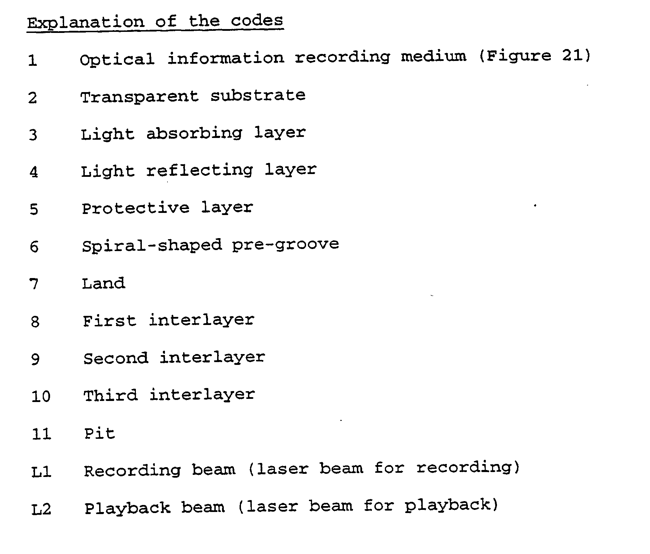

The material in the aforementioned light absorbing layer is benzoindodicarbocyanine; Figures 1 through 20 show examples of the structural formulas of a group thereof. The anions in these benzoindodicarbocyanine correspond to X⁻ in Figure 22 (discussed below) and X⁻ can be any of the following: ClO₄⁻, PF₆⁻, BF₄⁻, SbF₆⁻, IO₄⁻, CF₃COO⁻.

A more concrete explanation follows.

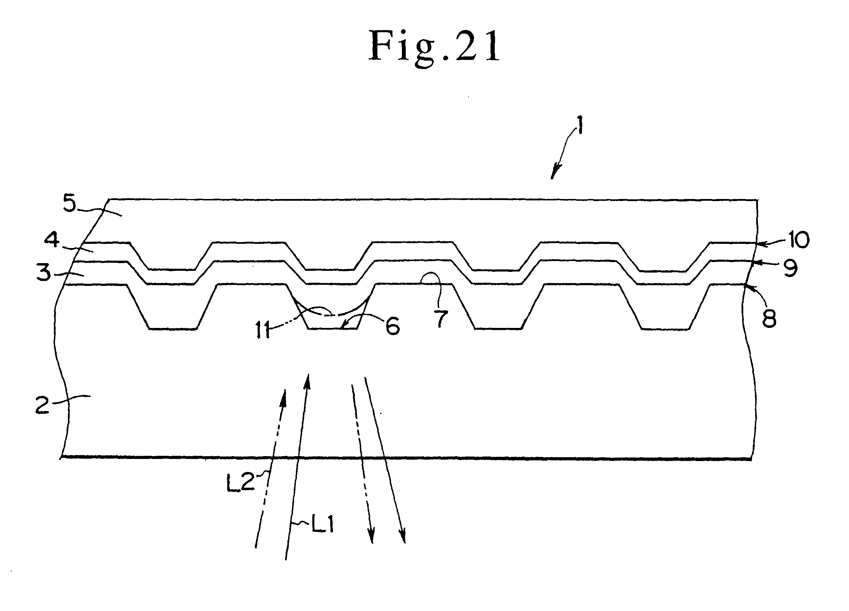

Figure 21 is a cross sectional view of the optical information recording medium 1 relating to the present invention. The optical information recording medium 1 comprises a transparent substrate 2, a light absorbing layer 3 formed on the substrate 2, a light reflecting layer 4 formed on the light absorbing layer 3, and a protective layer 5 formed on the light reflecting layer 4.

A spiral-shaped pre-groove 6 is formed on the substrate 2. A portion other than the pre-groove 6, specifically land 7, is located on either side of the pre-groove 6.

The light absorbing layer 3 comprises a light absorbing material. The light absorbing material comprises a principal light absorbing material constituted of one or a plurality of dyes which absorb the laser beam L1, and as necessary, other materials such as long-wavelength absorbing agents or stabilizers for stabilizing this principal light absorbing material.

As discussed below, in addition to the light absorbing material, the light absorbing layer 3 sometimes includes binders (molecular weight is usually 2000 or more) or solvents (molecular weight is usually 600 or less), used when applying the mixture of the principal light absorbing material, stabilizer, and long-wavelength absorbing agent.

The stabilizer (light stabilizer) is a compound wherein the absorption peak of the film is within the near infrared range of wavelength 900 - 1100 nm, and which fades into weak absorption of light in the range from short wavelengths, in the range absorbed by the principal light absorbing material, to long wavelengths, in the infrared range of 1500 nm or greater. For this reason, the stabilizer is a compound which is very effective in stabilizing the principal light absorbing material, although it cannot be expected to greatly improve recording sensitivity.

This stabilizer may be aminium salt, imonium salt, or a dithiol conjugate such as dithiobenzyl.

This stabilizer must be included in the light absorbing layer 3 so as to constitute 0.1 - 30 wt%, and preferably 1 - 25 wt%, and more preferably 5 - 20 wt%.

The long-wavelength absorbing agent has a maximum absorption peak at a longer wavelength than the wavelength of the recording beam L1; it may be, for example, a material with an absorption peak near the recording beam L1, or preferably a material where the peak differs from the recording beam by 30 - 100 nm.

The long-wavelength absorbing agent is a material resulting in a film absorption peak of approximately 800 - 900 nm in the case of recording with a recording beam L1 which is a laser beam with a wavelength of approximately 780 nm. This material increases absorption at longer wavelengths in the range of 780 - 800 nm; it is added with the object of improving recording sensitivity by combining its absorption curve with that of the principal light absorbing material. This long-wavelength absorbing agent can be expected to improve recording sensitivity across a broader range of wavelengths than before; moreover, in combination with the stabilizers, it can be expected to improve light stability as well.

This long-wavelength absorbing agent is a material which absorbs laser light with wavelengths near 780 - 800 nm; the long-wavelength absorbing agent is preferably a dye such as a polymethine dye like indotricarbocyanine or benzoindotricarbocyanine, or a porphyrin dye such as naphthalocyanine.

This long-wavelength absorbing agent must make up 0.1 - 5 wt% of the light absorbing layer 3, preferably 0.3 - 4 wt%, and more preferably 0.5 - 3 wt%.

Moreover, the solvent used for the application of the mixture of the principal light absorbing material, the long-wavelength absorbing agent, and stabilizer may make up 0.01 - 1.0 wt% of the light absorbing layer 3.

The solvent for application used here can be an alcohol such as isopropyl alcohol or butanol; an alkoxy alcohol such as methylcellosolve or ethylcellosolve; a ketoalcohol such as diacetone alcohol or acetyl acetone; lactic acid ester such as ethyl lactate or methyl lactate; or alcohol fluoride such as 2,2,3,3 tetrafluoropropanol. The solvent for application is not, however, limited to these.

Moreover, spin coating is generally used in forming the light absorbing layer 3 because of flexibility, but dip coating or vapor deposition methods may be used as necessary.

In view of application properties during coating, resin binders may also be added to the light absorbing layer 3.

The additive resin may be a thermoplastic resin such as nitrocellulose, a resin such as thermoplastic elastomer, liquid rubber, or the like.

Specifically, the resin may be isobutylene, maleic anhydride copolymer, polypropylene chloride, polyethylene oxide, nylon, polystyrene, or the like.

The cellulose derivative may be carboxymethyl cellulose, nitrocellulose, MC (methyl cellulose), EC (ethyl cellulose), or the like.

The oligomer may be oligostyrene, methylstyrene oligomer, or the like.

The elastomer rubber may be styrene block copolymer, urethane-type thermoplastic elastomer, or the like.

Moreover, the substrate 2 and light absorbing layer 3 are in contact via the first interlayer 8. The light absorbing layer 3 and light reflecting layer 4 are in contact via the second interlayer 9. The light reflecting layer 4 and the protective layer 5 are in contact via the third interlayer 10.

As shown in the figures, when the recording beam (recording laser beam) L1 strikes the optical information recording medium 1, the light absorbing layer 3 absorbs the energy of this laser beam L1 and is heated thereby. Thermal deformation occurs on the side toward the substrate 2 and forms a pit 11.

The index of refraction of the pit 11 portion is changed by the thermal decomposition of the dye in the light absorbing layer 3 at the recorded portion.

Information is read by shining the playback beam (playback laser beam) L2 on this pit 11 portion and finding the pit contrast from the thermal deformation of the substrate 2 at the pit 11 portion, and from the diffraction of light caused by the optical phase difference, due to the difference in the indexes of refraction of the pit 11 portion and the non-pitted portion (land 7).

Moreover, the principal light absorbing material (principal light absorbing agent) is a material which absorbs the laser beam L1 and breaks down during recording, creates variations in the index of refraction within the light absorbing layer 3, and causes the formation of the pit 11.

In the optical information recording medium according to the present invention, the solubility of the light absorbing layer 3 in 70 °C water is 1.0 x 10⁻¹ milligrams/liter or less.

More specifically, the solubility in 70 °C water of the light absorbing material (principal light absorbing material, stabilizer, long-wavelength absorbing agent) comprising the light absorbing layer 3 is 1.0 x 10⁻¹ milligrams/liter or less.

Furthermore, the molecular weight of the light absorbing material comprising the light absorbing layer 3 is 600 - 2000. The aforementioned light absorbing material can comprise the benzoindodicarbocyanine dye having the structural formula shown in Figure 22.

In the optical information recording medium according to the present invention, the material used in the dye film in the light absorbing layer 3 has a solubility in 70 °C water (hot water) of 1.0 x 10⁻¹ milligrams/liter or less and preferably has a molecular weight of 600 or more and 2000 or less; with this material, the dye anions in the light absorbing layer 3 are not negative halogen ions. Thereby it becomes possible to improve reliability, decrease deterioration, and reduce the molecular diffusion in the light absorbing layer 3 at high temperatures and high humidity; at the same time, it is possible to constitute the light reflecting layer 4 of materials such as silver (Ag) and aluminum (Al), which are less expensive than gold (Au).

In other words, the aforementioned CD-R type of optical information recording medium 1 has a light absorbing layer 3 comprising dye or the like between the polycarbonate substrate 2 and the light reflecting layer 4, which is metal; the deterioration of the recording can occur as a result of the breakdown of this light absorbing layer 3 and deformation of the substrate 2, as well as the optical phase difference in relation to the un-recorded portion of the recorded pit 11 portion caused by the difference in index of refraction in the light absorbing layer 3.

Because the difference in indexes of diffraction of the broken down dye and non-broken down dye is an important factor of this phase difference, sustaining the quality of the recording under conditions of high heat and humidity requires that neither the broken down dye nor the non-broken down dye move from their respective locations at the time of recording.

The inventors conducted their examinations with attention to this issue. As a result, they concluded that the movement of the dye material within the light absorbing layer 3 under conditions of high heat and humidity is closely related to the solubility of the dye in hot water at this ambient temperature.

In other words, inside the optical information recording medium, water vapor penetrates through the substrate 1 and condenses in the light absorbing layer 3, to become hot water of the same temperature. The dye dissolved therein moves arbitrarily within the light absorbing layer 3. It was thereby found that a dye which dissolves easily in hot water results in the deterioration of the recording.

Also, compounds having a relatively low molecular weight of 600 or less display a marked movement of the dye material; the low molecular weight material easily causes deterioration over time. Materials with a molecular weight of 2000 or more cannot be used because of their limited solubility in the application solvent and because of the increased jitter during recording.

Also, cyanine dyes were found to have the following property.

Dye materials comprising weakly basic anions such as I⁻, Br⁻, and SCN⁻ easily move about; dye materials comprising strongly basic anions such as ClO₄⁻, PF₆⁻, BF₄⁻, and SbF₆⁻ move about with difficulty.

Moreover, halogen anions such as I⁻ and Br⁻ are highly reactive and may react with and degrade a reflective film of Ag (silver). As a result, these have the limitation that such reflective films cannot be used.

As a result, the optical information recording medium 1, using a dye material with a solubility in hot water of 0.1 milligrams/liter or less, will not deteriorate in testing at high temperatures and humidity, at the same temperature as the hot water, and has a BLER following testing which adequately satisfies the standards. Moreover, it must be noted that when the light absorbing layer 3 includes even one type of compound which does not satisfy the aforementioned conditions, the movement within the film of that compound degrades the recording.

### First embodiment

The optical information recording media relating to the embodiments of the present invention are explained below.

Injection molding was used to produce a polycarbonate substrate 2, with thickness 1.2 mm, outer diameter 120 mm, and inner diameter 15 mm, and whereon is formed a spiral-shaped pre-groove 6 with width 0.55 µm, depth 200 nm, pitch 1.6 µm.

Next, the benzoic cyanine dye (No. NK-3386, molecular weight 701) with the structure shown in Figure 23, used as the recording dye, was dissolved in diacetone alcohol at 30 grams/liter. This was applied on the aforementioned substrate 2 and a dye film layer (light absorbing layer 3) with a film thickness of 75 nm was formed.

The solubility of the material in the light absorbing layer 3 in hot water at a temperature of 70 °C was 0.03 milligrams/liter.

A light reflecting layer 4, with thickness 100 nm and comprising gold (Au), was formed by RF sputtering on the substrate 2 having this dye film applied thereon. An ultraviolet-curable resin (Dainippon Ink and Chemicals, Inc., SD-211) was spin coated on this light reflecting layer 4 and exposed to ultraviolet light, forming a 10 µm thick protective layer 5.

After recording using a recording apparatus (Pulse-tech, DDU-1000) using a 780 nm wavelength laser beam L1, at a linear velocity of 1.2 m/s, this recording was played back and evaluated using a commercially available CD player (Aurex, XR-V73); it was found that the modulation amplitude was I11/Itop=72.4% and BLER was 0.4 cps.

"Itop" is the maximum amount of reflected light in the CD playback signal. "I11" is the optical variation component corresponding to the difference between the amount of reflected light diffracted by the longest length pit recorded and returned to the objective lens, and the amount of light reflected by the non-pitted portions and returned to the objective lens.

This disk was stored for 1000 hours at a temperature of 70 °C and relative humidity 85%, let stand for one hour at normal conditions, and evaluated in the same manner; it was found that the modulation amplitude was I11/Itop=72.0% and BLER was 1.2 cps. Eye pattern was not found to be different from before the test.

### Comparison example 1

An optical information recording medium 1 was prepared in entirely the same manner as in the first embodiment, except for forming a 73 nm thick light absorbing layer 3 using the following recording dye material: 80 wt% of the benzoic cyanine dye used in the first embodiment and 20 wt% of the indocyanine dye (molecular weight 539), having the structure shown in Figure 24, dissolved in diacetone alcohol at 25 grams/liter.

In this case, the solubility in 70 °C hot water of the indocyanine dye in Figure 24 and the blend forming the light absorbing layer 3 were 1.5 milligrams/liter and 1.3 milligrams/liter respectively.

The optical information recording medium 1 attained in this manner was recorded upon and measured using the same recording apparatus as in the first embodiment. It was found that the modulation amplitude was I11/Itop=70.4% and BLER was 0.3 cps.

In the same way as in the first embodiment, this disk was stored for 1000 hours at a temperature of 70 °C and relative humidity 85% and evaluated in the same manner; it was found that the modulation amplitude was I11/Itop=42.5%% and BLER was 3000 cps.

### Second embodiment

Injection molding was used to produce a polycarbonate substrate 2, with thickness 0.6 mm, outer diameter 120 mm, and inner diameter 15 mm, and whereon is formed a spiral-shaped pre-groove 6 with width 0.4 µm, depth 100 nm, pitch 0.8 µm.

Next, the benzoindodicarbocyanine dye (No. NK-4285, molecular weight 638) with the structure shown in Figure 25, used as the recording dye, was dissolved in diacetone alcohol at 20 grams/liter. This was applied on the aforementioned substrate 2 and a dye film layer (light absorbing layer 3) with a film thickness of 58 nm was formed.

The solubility of the material in the light absorbing layer 3 in hot water at a temperature of 70 °C was 0.02 milligrams/liter.

A light reflecting layer 4, with thickness 100 nm and comprising aluminum (Al), was formed by RF sputtering on the substrate 2 having this dye film applied thereon. An ultraviolet-curable resin (Dainippon Ink and Chemicals, Inc., SD-211) was spin coated on this light reflecting layer 4. A polycarbonate supporting substrate, with thickness 0.6 mm, outer diameter 120 mm, and inner diameter 15 mm, was applied thereon. This was exposed to ultraviolet light from the side of the supporting substrate and the two substrates were adhered.

The optical information recording medium 1 attained in this manner was recorded upon at a linear velocity of 3.5 m/s using a recording apparatus (Pulse-tech, DDU-1000) having a 640 nm semiconductor laser. When played back, it was found that the modulation amplitude was I14/Itop=63.0% and Rtop=61.5%R.

This disk was stored for 500 hours at a temperature of 70 °C and relative humidity 85%, let stand for one hour at normal conditions, and evaluated in the same manner; it was found that the modulation amplitude was I14/Itop=61.2%, Itop=60.1%, and the recording was not found to be different as compared to before the test.

### Third embodiment

An optical information recording medium prepared in the same manner as in the first embodiment, except for forming a 80 nm thick light reflecting layer 4 comprising silver (Ag) with sputtering, was evaluated in the same manner and using the same apparatus as in the first embodiment; the modulation amplitude was I11/Itop=73.8% and BLER was 0.5 cps.

This disk was stored for 1000 hours at a temperature of 70 °C and relative humidity 85%, let stand for one hour at normal conditions, and evaluated in the same manner; it was found that the modulation amplitude was I11/Itop=72.1% and BLER was 5.8 cps; the eye pattern was not found to be different as compared to before the test.

The present invention can result in an optical information recording medium having little deterioration of the recording under even conditions of high heat and humidity because of the reduced solubility of the light absorbing layer in hot water of 70 °C.

## Claims

1. An optical information recording medium comprising:
a transparent substrate;
a light absorbing layer established on the substrate and comprising a light absorbing material, constituted from a dye which absorbs the recording laser beam; and
a light reflecting layer established on the light absorbing layer and which reflects the laser beam;
wherein information is recorded through the shining of said recording beam on said light absorbing layer; and
wherein the solubility of said light absorbing layer in 70 °C water is 1.0 x 10⁻¹ milligrams/liter or less.

2. The optical information recording medium according to claim 1, wherein the solubility in 70 °C water of said light absorbing material comprising said light absorbing layer is 1.0 x 10⁻¹ milligrams/liter or less.

3. The optical information recording medium according to claim 1, wherein the molecular weight of said light absorbing material comprising said light absorbing layer is 600 - 2000.

4. The optical information recording medium according to claim 1, wherein said light absorbing material comprising said light absorbing layer is a benzoindodicarbocyanine dye.

5. The optical information recording medium according to claim 4, wherein anions in said benzoindodicarbocyanine dye are any of the following: ClO₄⁻, PF₆⁻, BF₄⁻, SbF₆⁻, IO₄⁻, CF₃COO⁻.

## Patentansprüche

1. Medium für optische Datenaufzeichnung, umfassend:
ein transparentes Substrat;
eine lichtabsorbierende Schicht, aufgebracht auf dem Substrat und umfassend ein lichtabsorbierendes Material, gebildet aus einem Farbstoff, welcher den Aufzeichnungslaserstrahl absorbiert; und
eine lichtreflektierende Schicht, aufgebracht auf der lichtabsorbierenden Schicht, und welche den Laserstrahl reflektiert;
worin die Daten durch das Bescheinen des Aufzeichnungsstrahls auf die lichtabsorbierenden Schicht aufgezeichnet werden; und
worin die Löslichkeit der lichtabsorbierendenden Schicht in 70°C Wasser 1,0 x 10⁻¹ Milligramm/Liter oder weniger beträgt.

2. Medium für optische Datenaufzeichnung gemäß Anspruch 1, worin die Löslichkeit in 70°C Wasser des lichtabsorbierenden Materials, umfassend die lichtabsorbierende Schicht, 1,0 x 10⁻¹ Milligramm/Liter oder weniger beträgt.

3. Medium für optische Datenaufzeichnung gemäß Anspruch 1, worin das Molekulargewicht des lichtabsorbierenden Materials, umfassend die lichtabsorbierende Schicht, 600 - 2000 beträgt.

4. Medium für optische Datenaufzeichnung gemäß Anspruch 1, worin das lichtabsorbierende Material, umfassend die lichtabsorbierende Schicht, ein Benzoindodicarbocyanin-Farbstoff ist.

5. Medium für optische Datenaufzeichnung gemäß Anspruch 4, worin die Anionen im Benzoindodicarbocyanin-Farbstoff aus den folgenden gewählt sind: ClO₄⁻ , PF₆⁻, BF₄⁻ , SbF₆⁻, lO₄⁻, CF₃COO⁻.

## Revendications

1. Support d'enregistrement optique d'informations comprenant :
un substrat transparent ;
une couche absorbant la lumière, située sur le substrat et comprenant un matériau absorbant la lumière, constitué d'une teinture qui absorbe le rayon laser d'enregistrement ; et
une couche réfléchissant la lumière, située sur la couche absorbant la lumière et qui réfléchit le rayon laser ;
dans lequel les informations sont enregistrées par la brillance dudit rayon d'enregistrement sur ladite couche absorbant la lumière, et
dans lequel la solubilité de ladite couche absorbant la lumière, dans de l'eau à 70°C, est 1,0 x 10⁻¹ milligramme/litre ou moins.

2. Support d'enregistrement optique d'informations selon la revendication 1, dans lequel la solubilité, dans de l'eau à 70°C, dudit matériau absorbant la lumière comprenant ladite couche absorbant la lumière est de 1,0 x 10⁻¹ milligramme/litre ou moins.

3. Support d'enregistrement optique d'informations selon la revendication 1, dans lequel le poids moléculaire dudit matériau absorbant la lumière comprenant ladite couche absorbant la lumière est de 600 à 2000.

4. Support d'enre gistrement optique d'informations selon la revendication 1, dans lequel ledit matériau absorbant la lumière comprenant ladite couche absorbant la lumière est une teinture de benzoindodicarbocyanine.

5. Support d'enre gistrement optique d'informations selon la revendication 4, dans lequel des anions dans ladite teinture de benzoindodicarbocyanine sont l'un quelconque des suivants : clO₄⁻, PF₆⁻, BF₄⁻, SbF₆⁻, IO₄⁻, CF₃COO⁻ .
